# EUROPÄISCHE PATENTSCHRIFT

(11) **EP 1 006 036 B1**
(45) Veröffentlichungstag und Bekanntmachung des Hinweises auf die Patenterteilung: **11.05.2005**
(21) Anmeldenummer: 99122820.6
(22) Anmeldetag: 17.11.1999
(51) Int. Cl.: B61F 5/10, B60G 17/052, F16F 9/04

(54) **Federsystem für Schienenfahrzeug**
Spring system for a railway vehicle
Système à ressort pour un véhicule ferroviaire

(30) Priorität: 03.12.1998 AT 204498
(43) Veröffentlichungstag der Anmeldung: 07.06.2000
(73) Patentinhaber: Connex Verkehr GmbH, 60389 Frankfurt (DE)
(72) Erfinder: Sommerer, Rudolf, Dipl.-Ing. Dr., 6200 Jenbach (AT); Mayr, Andreas, 6200 Wiesing (AT)
(74) Vertreter: Torggler, Paul Norbert, Dr.

(56) Entgegenhaltungen:
- WO-A1-96/11120
- DE-A1- 3 711 907
- DE-U1- 29 813 031
- GB-A- 1 210 465
- US-A- 3 049 362
- PATENT ABSTRACTS OF JAPAN vol. 016, no. 484 (M-1322), 7. Oktober 1992 (1992-10-07) & JP 04 175531 A (AISIN SEIKI CO LTD;OTHERS: 01), 23. Juni 1992 (1992-06-23)

## Beschreibung

Die Erfindung betrifft eine Federung für ein Schienenfahrzeug mit mindestens einer Federeinrichtung, insbesondere einer Luftfeder, und mit einer gegenüber dem Fahrwerksrahmen höhenverstellbar gelagerten Notauflage, auf die der Wagenkasten des Schienenfahrzeuges absinkt, wenn die Federeinrichtung ausfällt.

Ein solches Federsystem ist beispielsweise aus dem österreichischen Gebrauchsmuster 2471 oder DE29813031 U bekannt. Im Gegensatz zu bloßen Gummipuffern als Notfeder erlaubt die dort gezeigte Notauflage in Form eines höhenverstellbaren Hydraulikstempels auch im Notbetrieb eine Höhenverstellung des Fahrwerks gegenüber dem Wagenkasten des Schienenfahrzeugs. Dies ist vor allem bei längeren Schienenfahrzeugen, insbesondere Gliederzügen, von Vorteil, man kann nämlich die unter den Notauflagen der einzelnen Fahrwerke bzw. Fahrwerksseiten befindlichen Räume für die Hydraulikflüssigkeit kommunizieren lassen. Damit ist ein Pendeln der Hydraulikflüssigkeitssäule von links nach rechts bzw. von vorne nach hinten bezogen auf die Fahrzeuglängsrichtung möglich. Damit ist die Notauflage nicht vollkommen starr und man kann mit dem Fahrzeug auch Kuppen und Wellen überfahren, selbst wenn die Hauptfeder, insbesondere eine Luftfeder, ausgefallen ist.

Auch sonst kann eine Höhenverstellung der Notauflage für Schienenfahrzeuge günstig sein, beispielsweise zur Anpassung an die momentan gefahrene Geschwindigkeit.

Bei den bisherigen Federsystemen hat sich gezeigt, daß die höhenmäßige Positionierung der Notauflage durch eine bloße Regelung des Drucks der Hydraulikflüssigkeit relativ ungenau ist.

Aufgabe der Erfindung ist es daher, eine verbesserte Federung der eingangs genannten Gattung zu schaffen. Diese Aufgabe wird durch die Merkmale des Anspruchs 1 gelöst.

In Abhängigkeit von dem aus dieser Meßeinrichtung stammenden, vorzugsweise elektrischen Signal kann dann die Notauflage in ihrer Höhe verstellt werden, bei einem bevorzugten Ausführungsbeispiel, beispielsweise durch Zufuhr bzw. Ablassen von Hydraulikflüssigkeit unter einem Hydraulikstempel, auf dem die Notauflage ausgebildet ist. Es sind jedoch auch andere Höhenverstellungen, beispielsweise elektromechanische für die Notauflage durchaus denkbar und möglich.

Was die Meßeinrichtung selbst betrifft, so ist es günstig, die Sensoren nicht direkt an der Notauflage erfassen zu lassen, sondern einen mechanischen Meßfühler zu verwenden, der mechanisch mit der Notauflage mitbewegt wird. Es kann dann an einem platzmäßig günstigeren Ort die Lage des Meßfühlers mittels mindestens einem Sensor erfaßt werden, womit man auch die Lage der Notauflage kennt. Besonders eignet sich ein als Meßstift ausgebildeter Meßfühler, der axial verschiebbar in einer hülsenförmigen Führung gelagert ist, wobei die Sensoren an der hülsenförmigen Führung angebracht werden können. Der Meßstift kann beispielsweise an der Unterseite des Kolbens eines Hydraulikstempels anliegen und damit dessen vertikale Bewegung mitmachen.

Die erfindungsgemäße Meßeinrichtung, insbesondere in Form eines in einer Hülse geführten Meßstiftes kann leicht an bestehenden Federungssystemen nachgerüstet werden, um dort die Positionsgenauigkeit der Notauflage zu erhöhen.

Bei Federungssystemen, bei denen die Notauflage an einem Hydraulikstempe! ausgebildet ist, der von unten mit Hydraulikflüssigkeit beaufschlagt ist, kann sogar die Bestehende Ölzufuhröffnung verwendet werden, um darin den Meßfühler einzusetzen. Der Stift kann hohl ausgebildet sein, um den Durchgang des Hydrauliköls zu erlauben. Die Hülse kann mit dem Gehäuse des Federsystems verbunden, beispielsweise verschraubt werden. Damit erfüllt dann der Meßfühler eine Doppelfunktion, einerseits leitet er die Bewegung und damit die Lage der Notauflage nach außen weiter und kann dort beispielsweise mittels eines induktiven Sensors leicht erfaßt werden. Andererseits erlaübt er die Hydraulikflüssigkeitszufuhr in den Raum unter der Notauflage.

Weitere Vorteile und Einzelheiten der Erfindung werden anhand der nachfolgenden Figurenbeschreibung näher erläutert.
Die Fig. 1 zeigt schematisch ein Federsystem nach einem Ausführungsbeispiel der Erfindung,
Fig. 2 zeigt einen schematischen Längsschnitt durch einen Teil eines Ausführungsbeispiels eines erfindungsgemäßen Federsystems.

Da aus dem Stand der Technik die konstruktiven Details derartiger Federungen bereits bekannt sind (beispielsweise aus dem österreichischen Gebrauchsmuster 2471), kann im folgenden vor allem auf die erfindungswesentlichen Teile abgehoben werden.

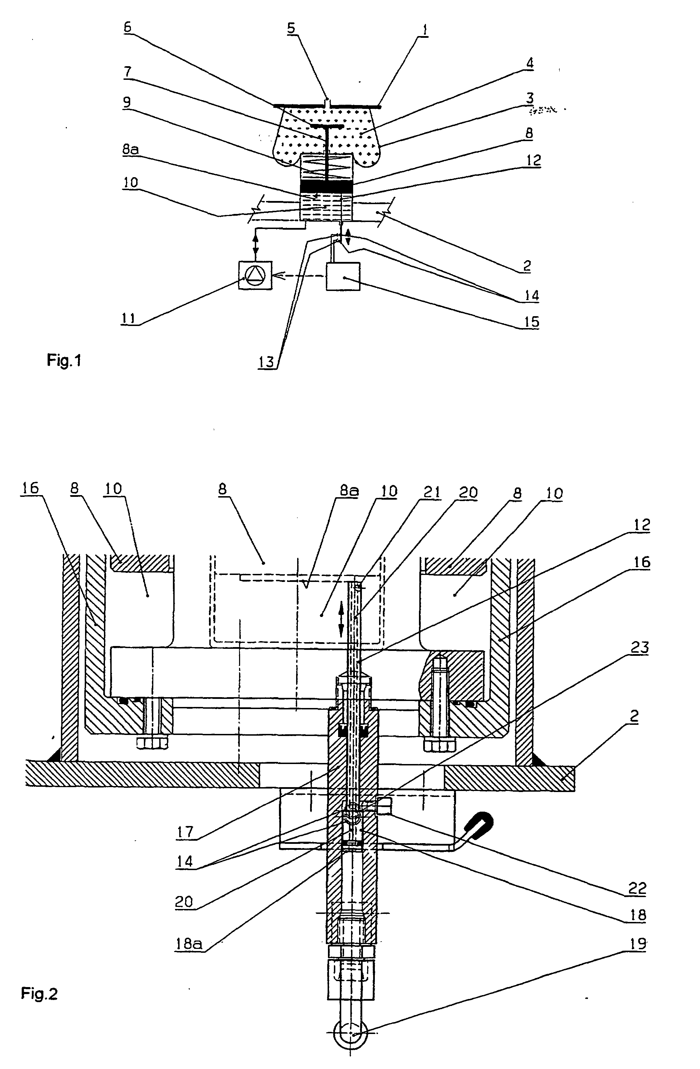

Bei dem in Fig. 1 dargestellten Ausführungsbeispiel ist mit 1 der Wagenkasten des Schienenfahrzeugs angedeutet. Der Fahrwerksrahmen eines nicht näher dargestellten zu federnden Fahrwerks trägt die Bezugsziffer 2. Es geht darum, den Wagenkasten 1 gegenüber dem Fahrwerksrahmen 2 abzufedem, was hauptsächlich über die Luftfeder 3 geschieht, in deren Innenraum sich im Normalbetrieb über eine Einfüllöffnung 5 eingefüllte Druckluft befindet.

Damit bei einem Ausfall dieser Luftfederung der Wagenkasten 1 nicht vollständig, sondern nur auf eine vordefinierte Höhe abfällt, ist eine höhenverstellbare Notauflage 6 vorgesehen, die beim vorliegenden Ausführungsbeispiel an einem Hydraulikstempel 7 ausgebildet ist. Dieser Hydraulikstempel weist unten einen Kolben 8 auf, dessen Unterseite 8a gegen die Wirkung einer Feder 9 mit Hydraulikflüssigkeit beaufschlagt ist, die im Raum 10 mittels einer schematisch angedeuteten Druckpumpe vorhanden ist. Über den Druck der Hydraulikflüssigkeit kann die Höhe der Notauflage 6 eingestellt werden. Dies ist prinzipiell auch ohne Meßeinrichtung, die im folgenden noch eingegangen wird, möglich, wenn man die von oben auf den Kolben 8 wirkenden Kräfte, insbesondere die Kraft der Feder 9 und der Druckluft und andererseits den Öldruck kennt.

In der Praxis hat sich gezeigt, daß eine solche Druckregulierung allerdings relativ ungenau ist. Aus diesem Grund schlägt die Erfindung nunmehr eine gesonderte Einrichtung vor, um die Höhenlage der Notauflage 6 exakt erfassen zu können. Bei dem in Fig. 1 dargestellten Ausführungsbeispiel handelt es sich bei der Meßeinrichtung um einen mit der Unterseite 8a des Kolbens 8 verbundenen oder daran angepreßten Meßstift 12, der von Sensoren 13 ablesbare Markierungen 14 trägt. Die Ausgänge dieser beispielsweise induktiven Näherungssensoren sind mit einer Auswerteinrichtung 15 verbunden, die über die Druckpumpe 11 und den Druck der Hydraulikflüssigkeit die Höhenlage der Notauflage 6 auf ein vorbestimmtes Maß regeln. Beim vorliegenden Ausführungsbeispiel sind nur zwei Sensoren 13 gezeigt, womit eine Einregelung auf eine bestimmte zwischen den beiden Sensoren liegende Höhenlage der Notauflage 6 möglich ist. Selbstverständlich sind auch mehrere Sensoren oder eine Sensorenzeile sowie kontinuierlich erfassende Sensoren denkbar und möglich, um die Höhenlage der Notauflage 6 auf einen beliebigen Wert festzulegen.

Die Fig. 2 zeigt ein weiteres Ausführungsbeispiel, das im wesentlichen dem unteren Teil der Fig. 1 entspricht. Man sieht noch den unteren Rand des Kolbens 8, dessen Unterseite 8a als Meßfläche dient. Die Höhenlage des Kolbens 8 gegenüber dem Gehäuse 16 spiegelt exakt die Höhenlage der darüber befindlichen Notauflage (in Fig. 2 nicht gezeigt) wieder. Es geht also darum, die Höhenlage der Fläche 8a zu erfassen.

Dazu ist bei dem in Fig. 2 dargestellten Ausführungsbeispiel ein Meßstift 12 vorgesehen, der axial verschiebbar in einer hülsenförmigen Führung 17 gelagert ist, die mit dem Gehäuse 16 verbindbar ist.

Der Meßstift 12 weist unten ein verdicktes Ende 18 auf, das einen Kolben mit einem Kolbenboden 18a bildet. Dieser Kolbenboden 18a wird von unten mit einer Hydraulikflüssigkeit (Hydrauliköl) über eine Leitung 19 beaufschlagt und nach oben gedrückt, womit der Meßstift 12 oben immer satt an der Fläche 8a anliegt und damit deren vertikale Bewegung mitmacht. Eine Entlüftungsöffnung ist mit einem Filter 22 versehen.

Außerdem ist der Meßstift 12 hohl ausgebildet, er weist im Inneren einen Kanal 20 und eine Austrittsöffnung 21 für Hydrauliköl auf. Damit ist es möglich, über die Hydraulikölzufuhr 19 durch den Meßstift 12 bzw. dessen Kanal 20 hindurch über die Ausströmöffnung 21 Hydraulikflüssigkeit in den Raum 10 unter den Kolben 8 zu bringen.

Zur Erfassung der Höhenlage des Meßstiftes 12 sind zwei Sensoren 14 vorgesehen, die die Höhenlage der Durchmesservariation 23 an jener Stelle erfassen, an der der Meßstift 12 von seinem geringeren oberen Durchmesser auf den dickeren unteren Durchmesser im Bereich der Bezugsziffer 18 anwächst. Diese Durchmesservariation bzw. Kante ist beispielsweise durch induktive Näherungsschalter leicht erfaßbar. Aufgrund der elektrischen Signale aus diesen Sensoren 14 können nicht dargestellte Auswert- bzw. Regeleinrichtungen die Hydraulikzufuhr in den Raum 10 und damit die Höhenlage der Notauflage verstellen.

Selbstverständlich sind auch andere Ausführungsbeispiele denkbar und möglich, beispielsweise kann die Meßrichtung innerhalb des Federsystems angeordnet sein und mehr oder weniger direkt die Lage der Notauflage erfassen, beispielsweise mittels optischer Sensoren. Grundsätzlich können auch andere Sensoren eingesetzt werden, beispielsweise Ultraschallsensoren od. dgl. Robuste für den Eisenbahnbetrieb geeignete Sensoren sind sicherlich die oben genannten induktiven Näherungsschalter. Auch ist die Erfindung nicht auf die Höhenverstellung über eine Hydraulikflüssigkeit beschränkt, auch anders verstellbare Notauflagen sind durchaus denkbar und möglich.

## Patentansprüche

1. Federung für ein Schienenfahrzeug (1), mit mehreren Federeinrichtungen (3), insbesondere Luftfedern, und mit jeweils einer gegenüber dem Fahrwerksrahmen (2) des Schienenfahrzeuges höhenverstellbar gelagerten Notauflage (6), **gekennzeichnet dadurch, daß** jede Notauflage eine gesonderte Messeinrichtung (12, 13) zum Erfassen seiner Höhenlage gegenüber dem Fahrwerksrahmen (2) aufweist.

2. Federung nach Anspruch 1, **dadurch gekennzeichnet, daß** die Meßeinrichtung (12, 13) einen an der Notauflage (6) bzw. einen damit verbundenen Teil (8) anliegenden bzw. damit in Verbindung stehenden, mechanischen Meßfühler (12) aufweist, dessen Lage an einer von der Notauflage (6) entfernten Stelle (8a) mit mindestens einem Sensor (13) erfaßt wird.

3. Federung nach Anspruch 2, **dadurch gekennzeichnet, daß** der Meßfühler (12) ein axial verschiebbar gelagerter Meßstift ist.

4. Federung nach Anspruch 3, **dadurch gekennzeichnet, daß** der Sensor (13) bzw. die Sensoren in bzw. an der vorzugsweise hülsenförmigen Führung (17) des Meßstiftes (12) angeordnet ist (sind).

5. Federung nach einem der Ansprüche 2 bis 4, **dadurch gekennzeichnet, daß** der mindestens eine Sensor (13) ein induktiver Näherungsschalter ist, der eine Markierung (14) oder Durchmesservariation (23) des Meßfühlers (12) erfaßt.

6. Federung nach einem der Ansprüche 1 bis 5, **dadurch gekennzeichnet, daß** die Notauflage (6) an einem Hydraulikstempel (7) ausgebildet ist, der von unten (10) mit unter Druck stehender Hydraulikflüssigkeit beaufschlagt ist und der von oben vorzugsweise unter der Wirkung einer Feder (9) steht.

7. Federung nach einem der Ansprüche 3 bis 4 und Anspruch 6, **dadurch gekennzeichnet, daß** die vorzugsweise einen Meßstift umfassende Meßeinrichtung (12, 14) in den mit Hydraulikflüssigkeit gefüllten Raum (10) reicht und die Lage des unteren Kolbenbodens (8a) des Hydraulikstempels (17) erfaßt.

8. Federung nach Anspruch 6 oder 7, **dadurch gekennzeichnet, daß** der Meßfühler (12) hohl ausgebildet ist und durch seinen Kanal (20) Zufuhr von Hydrauliköl in den Raum (10) unter dem Kolben (8) des Hydraulikstempels (17) erfolgt.

## Claims

1. A spring arrangement for a rail vehicle (1) comprising a plurality of spring devices (3), in particular air springs, and a respective emergency support (6) which is mounted adjustably in respect of height with respect to the bogie frame (2) of the rail vehicle, **characterised in that** each emergency support has a separate measuring device (12, 13) for detecting its height position with respect to the bogie frame (2).

2. A spring arrangement according to claim 1 **characterised in that** the measuring device (12, 13) has a mechanical measuring sensor (12) which bears against the emergency support (6) or a part (8) connected thereto or which is connected thereto and the position of which is detected at a location (8a) remote from the emergency support (6) by at least one sensor (13).

3. A spring arrangement according to claim 2 **characterised in that** the measuring sensor (12) is an axially displaceably mounted measuring pin.

4. A spring arrangement according to claim 3 **characterised in that** the sensor (13) or sensors is (are) arranged in or at the preferably sleeve-shaped guide (17) of the measuring pin (12).

5. A spring arrangement according to one of claims 2 to 4 **characterised in that** the at least one sensor (13) is an inductive proximity switch for detecting a marking (14) or variation (23) in diameter of the measuring sensor (12).

6. A spring arrangement according to one of claims 1 to 5 **characterised in that** the emergency support (6) is provided on a hydraulic ram (17) which is acted upon from below (10) by hydraulic fluid under pressure and which is preferably subjected from above to the force of a spring (9).

7. A spring arrangement according to one of claims 3 to 4 and claim 6 **characterised in that** the measuring device (12, 14) which preferably includes a measuring pin extends into the space (10) filled with hydraulic fluid and detects the position of the lower piston face (8a) of the hydraulic ram (17).

8. A spring arrangement according to claim 6 or claim 7 **characterised in that** the measuring sensor (12) is hollow and a feed of hydraulic oil into the space (10) under the piston (8) of the hydraulic ram (17) is effected through the passage (20) of the measuring sensor (12).

## Revendications

1. Suspension à ressorts pour un véhicule sur rail (1), comprenant plusieurs dispositifs à ressort (3), en particulier des amortisseurs pneumatiques, et à chaque fois un appui de secours (6) réglable en hauteur par rapport au châssis (2) du véhicule sur rail, **caractérisée en ce que** chaque appui de secours présente un dispositif de mesure (12, 13) séparé pour détecter sa position en hauteur par rapport au châssis (2).

2. Suspension à ressorts selon la revendication 1, **caractérisée en ce que** le dispositif de mesure (12, 13) présente un capteur mécanique (12) appuyé contre ou en contact avec l'appui de secours (6) ou un élément (8) relié à celui-ci, dont la position est détectée par au moins un détecteur (13) en un point (8a) éloigné de l'appui de secours (6).

3. Suspension à ressorts selon la revendication 2, **caractérisée en ce que** le capteur (12) est une tige de mesure à déplacement axial.

4. Suspension à ressorts selon la revendication 3, **caractérisée en ce que** le détecteur ou les détecteurs (13) sont disposés dans ou au niveau du guidage (17), de préférence en forme de manchon, de la tige de mesure (12).

5. Suspension à ressorts selon l'une des revendications 2 à 4, **caractérisée en ce que** le au moins un détecteur (13) est un détecteur de proximité inductif qui détecte un repère (14) ou une variation du diamètre (23) du capteur (12).

6. Suspension à ressorts selon l'une des revendications 1 à 5, **caractérisée en ce que** l'appui de secours (6) est formé sur un vérin hydraulique (7) qui est alimenté par le dessous (10) par un fluide hydraulique sous pression et qui, de préférence, est soumis par le dessus à l'action d'un ressort (9).

7. Suspension à ressorts selon l'une des revendications 3 à 4 et selon la revendication 6, **caractérisée en ce que** le dispositif de mesure (12, 14), comprenant de préférence une tige de mesure, s'avance jusque dans l'espace (10) rempli de fluide hydraulique et détecte la position de la face inférieure du piston (8a) du vérin hydraulique (17).

8. Suspension à ressorts selon la revendication 6 ou 7, **caractérisée en ce que** le capteur (12) est creux et **en ce que** l'huile hydraulique est amenée dans l'espace (10) en dessous du piston (8) du vérin hydraulique (17) à travers son canal (20).
